# NEW EUROPEAN PATENT SPECIFICATION

(11) **EP 2 355 652 B2**
(45) Date of publication and mention of the opposition decision: **17.03.2021**
(45) Mention of the grant of the patent: 01.10.2014
(21) Application number: 09752529.9
(22) Date of filing: 09.11.2009
(51) Int. Cl.: A01J 7/04

(54) **Method and device for automatically bringing a fluid into contact with the teats of an animal**
Verfahren und Vorrichtung zum automatischen inkontaktbringen eines Fluids mit den Zitzen eines Tieres
Procédé et dispositif de mise en contact automatique d'un fluide avec les tétines d'un animal

(30) Priority: 10.11.2008 US 198839 P
(43) Date of publication of application: 17.08.2011
(73) Proprietor: GEA Farm Technologies GmbH, 59199 Bönen (DE)
(72) Inventor: WILMERT, Wolfgang, Schulze, 48599 Gronau-Epe (DE); FRENSER, Reinhard, 33378 Rheda-Wiedenbrück (DE); AUSTERMANN, Michael, 59387 Ascheberg (DE); THEIS, Christelle, 58640 Iserlohn (DE); TORGERSON, Kevin, L., Holmen WI 54636 (US)
(74) Representative: Specht, Peter
(86) International application number: PCT/US2009/006026
(87) International publication number: WO 2010/053577

(56) References cited:
- EP-A1- 0 945 057
- EP-A1- 1 279 326
- EP-A1- 1 520 469
- WO-A1-01/19169
- WO-A1-98/28969
- WO-A1-99/03330
- WO-A1-2006/029797
- WO-A1-2006/029797
- WO-A2-2005/102035
- DE-A1- 10 160 161
- DE-C- 261 300
- US-A- 4 924 809
- US-A- 5 881 669
- US-B2- 6 935 270
- US-B2- 7 401 573
- Akam, D.N.: "The development of equipment for the mechanization of manual operations in machine milking", Proceedings of the international Symposium on Machine Milking, February 1978 (1978-02),

## Description

The invention concerns a device for automated dipping according to the main clause of Claims 1.

It is known that milking systems can be equipped with a device for bringing a teat of an animal into contact with at least one fluid - or several fluids -, briefly referred to below as "dipping devices".

Thus, according to a variation of the state of the art, the teats of a milk-producing animal are sprayed after milking with the aid of a spraying installation using a dipping agent designed as a disinfectant. Such spraying installations have exit nozzles for the spraying agent, for example, integrated in a spray beam located on the floor, or they are arranged on a robot arm that carries a milking cluster. The disadvantage of these solutions of the state of the art is a relatively high dipping agent consumption, since the dipping agent can be sprayed only in a relatively undefined manner into the area of the teats of the milk-producing animal.

A significant improvement in comparison to the above state of the art is achieved by the generic US Patent 7,401,573 B2. According to the teaching of this patent, the dipping agent is passed into the teat cup after milking and before removal of the milking unit/cluster from the teats, in order to carry out the actual dipping process, that is, in order to wet the teats with the dipping agent. After the removal of the milking cluster, the teat cups are rinsed with a cleaning agent (which can also be water) in order to remove any residues of the dipping agent from the teat cups before the next milking process begins.

Regarding an especially advantageous construction of the teat cups, which have at least one or several integrated line(s) for a fluid such as a dipping agent designed as a disinfectant and/or the cleaning agent, let us refer also to WO 2006/029797.

EP 1 520 469 A1 discloses the features of the preamble of claim 1, however, only one applying member with a fluid pattern detecting means is used for all teats of the cow. This method and device should be further optimized, so that they will be even better suited for use in milking robots.

The invention solves this task by the subject matter of Claim 1.

In comparison to EP 1 520 469 A1, claim 1 of the present application teaches that an inlet line for the fluid to be introduced is guided to each teat cup and one of the dipping valve arrangements is assigned to each of the inlet lines and/or to each of the teat cups and the dipping valve arrangement can be controlled separately.

By these means, the dipping process can very easily be carried out for each teat right after the removal of the particular teat cup "individually for each teat" even displaced in time from one another, which is particularly advantageous when the milking system - for example a milking robot - is designed to remove the teat cups from the teats of an animal displaced in time one after another when the particular milking process on the teat is completed.

Advantageons embodiments of the invention are to be seen in the subclaims.

Below the invention will be explained in more detail with the aid of practical examples with reference to the drawling. The following are shown:
- Figure 1: is a schematic representation of an embodiment of dipping device according to the invention connected to the teat cups of a milking system;
- Figure 2: is a circuit diagram provided with symbols for switching devices of a dipping valve arrangement for a dipping device according to the invention;
- Figure 3a, b: are circuit-diagram-like representations of two different safety valve arrangements for dipping valve arrangements of the dipping devices according to the invention;
- Figures 4a-d: are various sections through a partial region of a teat liner for a milking device equipped with a dipping device according to the invention; and
- Figure 5: is an example of a temporal flowchart of a dipping process according to the invention.

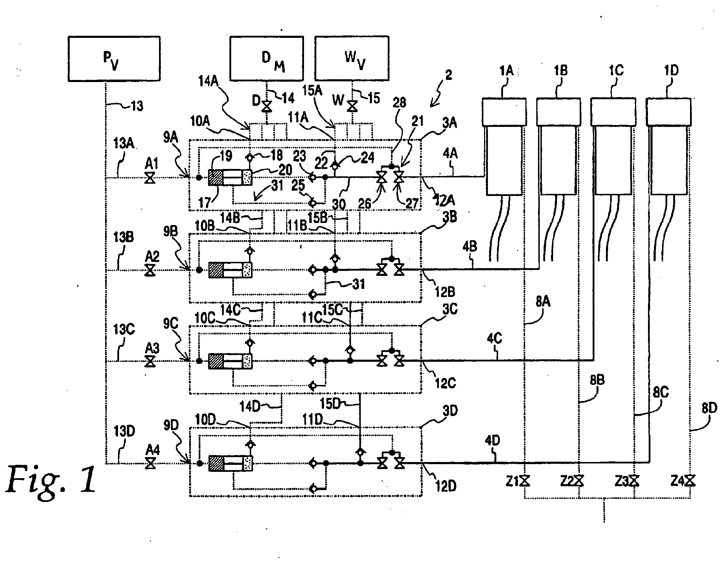

Figure 1 shows a schematic representation of a device for a preferably automated bringing of a teat of an animal into contact with at least one fluid - or with several fluids - briefly referred to below as "dipping device".

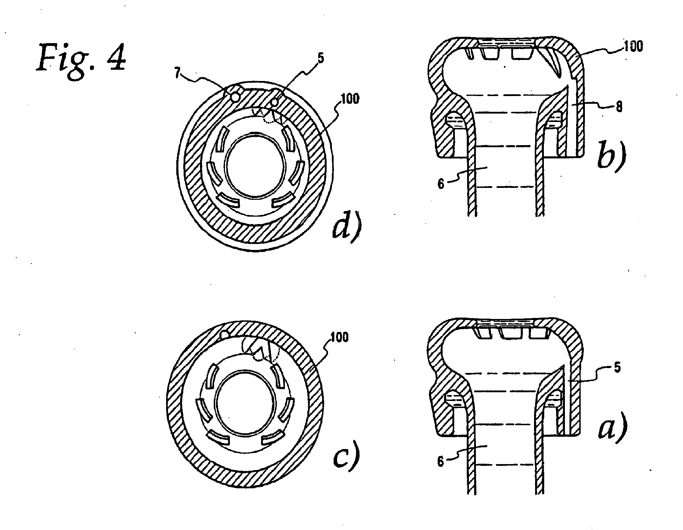

With regard to an example of the construction of the teat cups, let us first of all refer to the description of Figure 4 below, and also again to the already-quoted WO 2006/029797 (or additionally, if appropriate, to the not-yet-published US 12/215/706).

The dipping device 2 is suitable for use as a component part of a milking system, particularly of an automated milking system designed as a milking robot, designed for placing automatically, without manual intervention by an operator, the teat cups 1a - 1d of an otherwise not shown milking machine (= milking cluster), onto the teats of an animal to be milked, to milk the animal at the teats and to remove the milking cups.

Such milking robots are known in many different embodiments and are therefore not shown here, except for the teat cups 1 and the dipping device 2 that is connected to the teat cups.

The milking system has a number of teat cups 1a to 1d corresponding to the number of teats of the animal to be milked with the milking system, and, among other things, these are also connected to the dipping device 2.

The dipping device 2 serves for controlled introduction of a fluid, or, in the present case, of several fluids - particularly a disinfectant, (called dipping agent below) and/or a cleaning agent, such as water - from a dipping agent supply - for example, from a dipping agent reservoir D_{M} - and/or from a water supply W_{V} - to or here into the teat cups 1a - 1d.

The dipping device 2 is designed in such a way that it is possible to control, that is, at least to release or stop, the fluid introduction between the dipping agent supply D_{M} and/or the water supply W_{V} through lines 4a - 4d to each of the teat cups 1a - 1d separately, independently of the fluid introduction to the other teat cups 1.

Especially preferably the introduction of the fluid is displaced in time to each teat cup 1a - 1d, such as after the completion of the particular milking process on each teat. This is particularly advantageous in the case of a milking robot, when it does not apply and/or remove the teat cups 1a - 1d simultaneously, but displaced in time, in order to have the dipping follow the actual milking immediately.

However, purely theoretically, it is also possible to introduce the fluid to be introduced to the teat cups 1a - 1d - particularly the dipping agent - simultaneously when the dipping valve arrangements 3a - 3d are started at the same time.

According to the invention represented in Figure 1, the dipping device 2 does not have just a single dipping valve arrangement 3, which is switched between the dipping agent reservoir D_{M} and the teat cups 1a - 1d, but more than two, in this case four dipping valve arrangements 3a - 3d.

The number of dipping valve arrangements 3a - 3d corresponds to the number of teats of the animal to be milked, that is, thus it corresponds also to the number of teat cups 1a to 1d, in order to be able to control the introduction of fluid or fluids to each of the teats separately.

In the direction of flow of the fluid to be introduced, one of the dipping valve arrangements 3a to 3d is connected before each teat cup 1a to 1d so that one of the connections from an internal intermediate reservoir (see below) in one of the lines 4a - 4d can be released into or locked out of one of the teat cups 1a - 1d.

The dipping valve arrangements 3a - 3d are controlled with compressed air, are each connected through lines 4a - d to a teat cup 1a - 1d or attached to a teat cup 1a to 1d.

The dipping valve arrangements 3a - 3d are preferably designed according to the invention at least for releasing or preventing the introduction of the dipping agent into the lines 4a - 4d - here to the teat cups 1a - 1d. However, preferably an extended functionality can also be realized with these.

The dipping valve arrangements 3a - 3d are preferably designed in order to realize additional functions, particularly cleaning functions and/or safety functions that meaningfully complement the actual dipping process and/or contribute to increasing the safety of the dipping process.

For this purpose the dipping valve arrangements 3a - 3d are designed so that they control the teat cups 1a - 1d in such a way that failure occurrences - particularly an unintended introduction of dipping agent into a teat cup 1a - 1d at a time that was not intended - can be prevented with high probability even with safety requirements that are becoming ever stricter.

The teat cups 1a - 1d have a teat cup and a teat liner, which is shown in Figure 4 and carries there the reference number 100. Hereby the teat liners 100 are preferably designed so that one can clean, milk and/or dip the teat with a single teat liner.

The teat cup 1 - preferably its teat liner 100 and again especially preferably the teat liner heads - according to an especially advantageous design - see Figure 4 - have a duct 5 integrated into their wall which is designed to guide the fluid flowing from the dipping valve arrangements 3a - 3d through one of lines 4a - 4d, particularly the dipping agent or the cleaning agent, into the inside of the teat cup or into the inside of the teat liner in order to wet the teats of an animal after the attachment of the teat cup onto the milk-producing animal with the fluid - particularly with the dipping agent - introduced through the corresponding line 4a, b, c or d.

The discharge of fluid, such as the dipping agent, water or milk, from the teat cups or from the inside chamber of the corresponding teat liner is performed, on the other hand, through a line 6 and through the devices connected after this, for example, with regard to the milk, a milk collecting piece and long milk tubes or similar (not shown here). The discharge of the dipping agent or cleaning agent is done preferably into a separate line (not shown here).

The teat cups 1a - 1d - again preferably their teat liners 100 - furthermore have another duct 7 integrated into the teat cups 1a - 1d, which are designed to guide another fluid, such as a cleaning agent and/or water into the inside of the teat cup or into the inner chamber of the teat liner in order to rinse around or through the inside of the teat cup and the teats with this additional fluid.

In the practical example shown, the ducts 5 and 7 are arranged displaced on the periphery. The advantages of this known arrangement follow from WO 2006/029797. The teat liners 100 shown there can also be used in principle within the framework of the present invention.

The ducts 7 are always connected before inlet lines 8a - 8d, in which shut-off valves Z1 to Z4 are connected, so that the inlet lines 8a - 8d to the teat cups can also be controlled separately or opened and closed separately from one another. These inlet lines 8 can be connected, for example, to a cleaning agent supply (not shown here).

However, according to an alternative embodiment - which is not shown here and is less preferred - it is also conceivable to use the same duct in a teat liner for the introduction of the dipping agent and for the introduction of the other fluid, whereby then the additional fluid is introduced into the duct 5 before the teat cups/teat liners 100 (not shown here).

In the present case, in an advantageous embodiment, the dipping agent valves 3a - 3d all have the same construction.

Hereby the dipping valve arrangements 3 are in each case the devices which are shown as dashed-line boxes and each of which provides for the dipping of one of the teats based on its functionality.

The dipping valve arrangements 3 are designed so that with them the dipping agent and/or at least one additional fluid can be guided through each one of the inlet lines 4a - 4d to the milking cups or so that the flow into the inlet lines 4 can be interrupted.

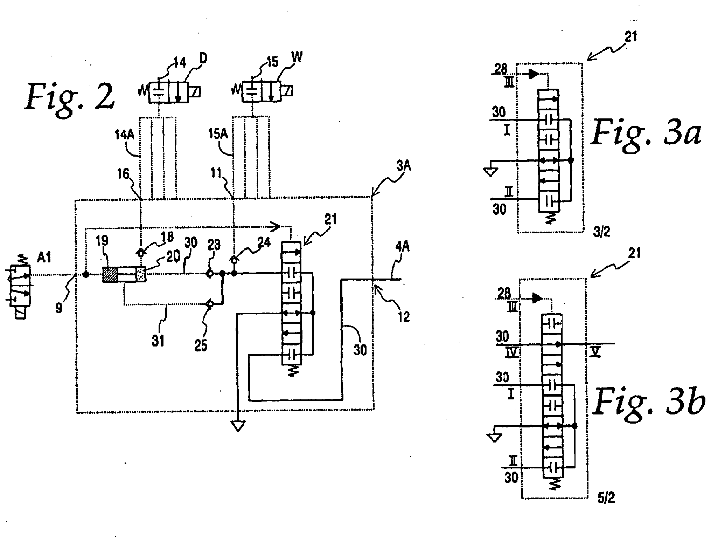

According to Figure 1 as well as Figure 2, the dipping valve arrangements 3 have three inlets 9a - 9d, 10a - 10d and 11a - 11d for controlling air, the dipping agent and another fluid such as water, and one discharge 12.

In the present practical example, in each case a first of the inlets - of inlets 9a-9d - of the dipping valve arrangements 3a - 3d is connected to four branch lines 13a, 13b, 13c, 13d to the compressed air supply Pᵥ through a line 13 which branches from a compressed air supply Pᵥ toward the inlets. In each of the branch lines 13a, 13b, 13c, 13d a shut-off valve A1 to A4 is connected, one before each of the inlets 9a - 9d.

Moreover, the second inlets 10 of the dipping valve arrangements 3a - 3d are in each case connected to the dipping agent reservoir D_{M} - for example, a dipping agent container or a dipping agent pump arranged sufficiently high in the milking system - through an inlet 14 branching into four branch lines 14a - 14d in which a single all-embracing shut-off valve D is connected before the region of the branching.

Finally, the third inlets 11a - 11d of the dipping valve arrangements 3a - 3d are connected to the cleaning agent/water supply W_{V}, for example a container or pump, through an inlet line 15 branching into four branch lines 15a - 15d, in which a shut-off valve W is connected before the region of the branching.

At the discharges 12a - 12d of the dipping valve arrangements 3a - 3d one of the inlet lines 4a - 4d is connected in each case to the teat cups 1a - 1d.

In each case the dipping valve arrangements 3a - 3d have a cylinder 17 which is designed as a double-action cylinder with a two-sided piston.

A cylinder chamber or one side 19 of this cylinder 17 is connected in each case to the corresponding inlet 9a - 9d for the introduction of compressed air. On the other hand, the other cylinder chamber 20 of cylinder 17 is connected in each case to a cylinder inlet, - preferably through a check valve 18 that prevents backflow of the dipping agent to the dipping agent reservoir - to the inlet 10a - 10d for the dipping agent and through an internal line 30 through a check valve 23 to an inlet of a safety valve arrangement 21, which has a discharge that is connected to the discharge 12a-12d and thus to one of the inlet lines 4a - 4d to the teat cups 1a - 1d.

It is possible to fill the chambers 19 and 20 of cylinder 17 alternately with compressed air or dipping agent (or preferably alternatively with cleaning agent), whereby the filling by means of compressed air is used to empty the cylinder chamber 20 that was previously filled with dipping agent through a line 30 which leads to a safety valve arrangement 21 of the dipping valve arrangement, to empty into the particular inlet line 4a - 4d to the teat cups 1a - 1d and to pass the dipping agent through the particular inlet line 4 into one of the teat cups 1a - 1d in each case.

A check valve 23 is connected in line 30 between the cylinder chamber 20 and the safety valve arrangement 21.

An inner inlet line 22 from inlet 11a - 11d also opens into line 30 to which the cleaning agent/water supply W_{V} is connected, in which again a check valve 24 is connected that allows fluid to flow again in the direction from inlet 11a - 11d to line 30.

The safety valve arrangement 21 can be designed in different ways.

Two possible arrangements are shown in Figure 3a and 3b, whereby the safety valve arrangement corresponds to that of the example of dipping valve 3a of Figure 2.

Accordingly, the safety valve arrangement as a 3/2-way valve is provided with three external connections I (inlet line 30 from cylinder chamber 20 of cylinder 17), II (discharge line 30 to the inlet line 4a to the teat cup 1a) and III (control inlet 28 for controlling with compressed air).

In one of the positions the line 30 for the dipping agent or the cleaning agent to the particular inlet line 4 to the teat cup is released and in the other position the line 30 is interrupted twice in order to ensure with high reliability that no fluid can flow to the particular teat cup 1a, b, c or d at a time that is not intended.

The safety valve arrangement 21 can also be realized in another way, such as according to Figure 3b, for example, with the aid of a 5/2-way valve, which has an additional lock-out possibility for a fluid line, through the safety valve arrangement of Figure 2 at inlets IV and V, which can be used for securing or resecuring a line of the internal lines of the dipping agent valve.

On the other hand, the valves A1, A2, A3 or A4, D and W that are connected before the dipping valve arrangement 3a can be controlled or switched electrically, which is done preferably with the aid of a superordinate control device of the milking system that controls the milking process (the control device is not shown here).

In addition, a bypass line 31 goes from cylinder 17 to line 30, which again has a check valve 25 connected in it.

In Figure 1, the safety valve arrangement is shown by means of a replacement circuit diagram with two check valves 26, 27 connected in series, to which a control inlet 28 is assigned, which is in each case connected to inlet 9 to which the compressed air lines 13a to 13d are connected, in order to be controlled with compressed air by actuating valves A1 to A4 in each case.

The safety valve arrangement 21 is designed to be switched either into a lock-out position or open position, in which the dipping agent or water is passed from the dipping agent supply, which has flowed into the cylinder chamber 20 of cylinder 17, into the particular inlet line 4a - 4d and into the corresponding teat cups 1a - 1d.

This can be done in order to either wet the particular teat with the dipping agent or in order to rinse or clean the inlet lines 4 and the feed lines 5 as well as the teat liners 100.

It is also possible to move the safety valve arrangement 21 into a locked position in which no introduction of dipping agent or of water can occur through the particular line 4.

Through the selected circuit, water and dipping agent can be introduced individually to each teat cup independently of one another.

The control of valves D, W, A1 to A4 as well as Z1 to Z4 is preferably done electrically with the aid of a correspondingly-programmed control computer. On the other hand, the actual dipping device with the dipping valve arrangement 3 is preferably designed as a system that is controlled purely with fluid, the control of which is done quasi-indirectly through the control of valves A1 - A4, D, W.

Now the function of the arrangement outlined will be described in more detail as an example.

First of all let us explain how the first milk is obtained during a milking procedure.

### Alternative I of the first milking/cleaning

After the placement of the four teat cups 1, water is first introduced to the particular four teat cups, here to their teat liner heads 100, with the ducts 7, individually for each teat, namely through the lines 8a - 8d for teat cleaning, that are shown with black dashed lines.

Hereby, in the milking robot, the storage container for the cleaning water (which can also be container W_{V}) is preferably arranged higher than the teat cups 1a - 1d that are to be placed onto the teats of the udder, which has the advantage that the introduction of cleaning water to the teat cups 1 is supported by gravity and the milking vacuum applied to the teats.

Since in the particular teat cups - preferably designed as two-chamber teat cups 1a - 1d - during the production of the first milk, a vacuum is produced in the teat liner inner chamber and an alternating vacuum is produced in the teat cup intermediate chamber (pulsation), the teat cup liner is thereby opened and closed with respect to the path from the milking line to the teat opening. Accordingly, the teat liner 100 is constantly in motion, which promotes the cleaning of the teats.

Thus, during the obtaining of the first milk, a mixture of cleaning water and milk is obtained which cannot be used (first milk). This mixture is separated into a special container in a manner that is not shown here.

Preferably, for this purpose two separate ducts are produced at the teat liner head. The first line - duct 7 - is used for cleaning the teats during the obtaining of the first milk and the second - duct 5 - is used for dipping the teats after the milking.

The dipping is explained further below.

### Alternative II of the first milking/cleaning

In contrast to alternative I, a second alternative for first milking uses water under pressure from the dipping installation, namely in the following manner:
First, valve W is opened in order to allow the water under pressure to enter into the line system of the dipping valve arrangement 3.

Then valves A1 to A4 are opened in order to feed compressed air at inlets 9 into the four corresponding dipping valve arrangements 3.

In this way, the four corresponding safety valve arrangements 21 - also called block-bleed-block devices - are opened so that the water under pressure allowed to enter the particular dipping valve arrangement 3 is first mixed with the compressed air allowed to enter the dipping valve arrangement 3 in order then to allow the corresponding mixture to arrive at the corresponding teat liner head. The mixing with the compressed air is provided by the cylinder 17 arranged in the particular dipping valve arrangement 3. The cylinder 17 is on the right so that the compressed air can leave the cylinder 17 through bypass line 31 in order to be mixed with the water under pressure located in the valve.

Thus, alternative II has only one line 5 in the teat cup, which ensures the introduction of the cleaning agent to the teat liner head.

### Alternative III of first milking/cleaning

In the third alternative of first milking the black and dotted line for the cleaning water between valve 27 of the safety arrangement or between block 27 and the teat liner head 100 is connected to dipping duct 5 so that here too only one agent line is needed, which makes the connection to the teat liner head.

The dipping device is designed so that it can be combined with all three variations of the first milking and optionally also with other variations.

### Regarding dipping after milking

The milking process is ended by turning off the milking vacuum in the teat liner inner chamber and turning off the pulsation cycles within the teat cup intermediate chamber or the teat cup pulsation chamber.

Since the milking vacuum decreases slowly, the particular teat cup 1a - 1d remains attached to the corresponding teat for a certain period of time. The vacuum producing the attachment decreases by itself due to the fact that the contact between the teat liner and the teat is not tight. When the vacuum producing the adhesion has decreased sufficiently, the teat liners fall off by themselves. The falling off of the teat cups can be promoted by increasing the running time of the pulsator beyond the time point when the milking vacuum is turned off.

On the other hand, the teat cups 1a - 1d are pulled away from the teats when the teat liners stick to the teat due to an unfavorable shape of the teats.

Before the teat cup is taken off or falls off optionally individually from the teats the treatment of the teats with the aid of the dipping valve arrangement 3 described above occurs as follows:

With the aid of the double piston 17, it is ensured that a dipping agent plug can arrive at the teat liner head 100. Hereby it must be ensured that the double piston 17 was already filled with dipping agent, namely according to the scheme shown on the right side of the double piston in the cylinder chamber 20 (see Figure 1). In this position, the bypass line 31 of the double piston 17 is closed in each case.

Now, the dipping of the first teat is initiated by opening the first compressed air valve A1, because the double piston 17 is thereby shifted to the right, so that the dipping agent plug is pushed out from the cylinder chamber 20, whereupon the check valve 23 opens.

At the same time, the compressed air introduced through the compressed air valve A1 causes the block-bleed-block device or the safety valve device 21 to open correspondingly, so that the dipping agent plug can arrive at the teat liner head.

When the entering compressed air has pushed the double piston 17 to the right to such an extent that the compressed air can leave through the bypass line that has become free, the line 30 and 4 are emptied with the aid of the compressed air that finds its way through bypass line 31.

Simultaneously, the double piston 17 moves again to the left due to the dipping agent pressure, so that the dipping valve arrangement can be loaded with a new dipping agent plug.

Preferably the dipping agent valve 3 is filled with dipping agent again only before or during the next milking process after the cleaning of the dipping agent valves 3a - 3d.

Then the interaction between the entering compressed air and the dipping agent plug begins again.

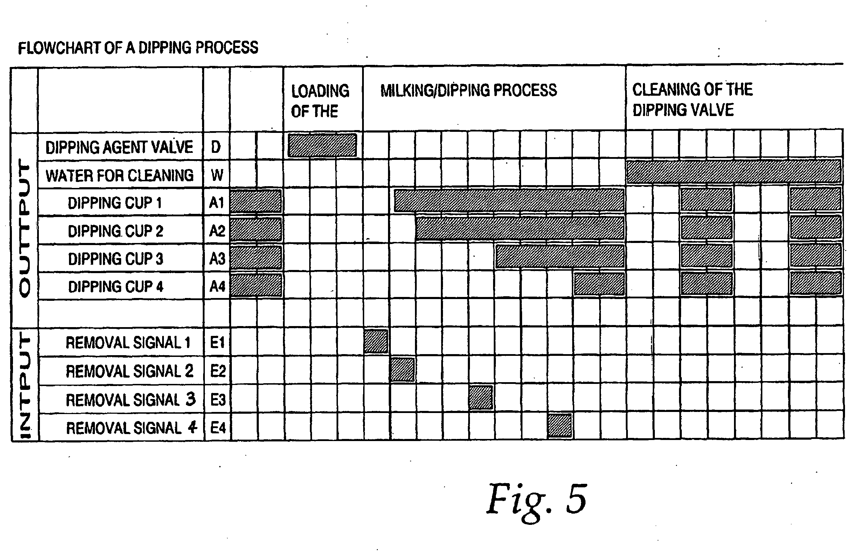

Preferably all the safety valve arrangements 21 are filled with dipping agent simultaneously, but are emptied in succession (Figure 5).

The dipping agent valve 3a - 3d is preferably constructed in such a way that the complete amount of dipping agent for a dipping process of the teat is stored. For multiple loadings and dipping there is not sufficient time, particularly since the introduced compressed air (for emptying the dipping line) accelerates the reduction of the vacuum that causes the adhering and thus the teat cups fall from the teat immediately.

Figure 5 shows further that the actual dipping after the milking process can be introduced delayed in time, while the cleaning of the four dipping valve arrangements after the ending of the actual dipping process can occur simultaneously.

The safety valve arrangement 21 called block-bleed-block device is sealed on both sides, namely with the aid of valves 26 and 27. The line between valves 26 and 27 is interrupted by a ventilation valve. When compressed air is introduced to the valve arrangement at the control inlet 28, then between the two valves 26 and 27 a connection is made to the line before and after the block-bleed-block device.

In this way it is ensured that due to the vacuum applied to the teats, during milking no dipping agent can get into the marketable milk, since the path between the milk channel or the duct 5 in the teat cups, respectively, and the reservoir D_{M} of the dipping agent is secured off with two sealed blocks (valves 26 and 27).

If a part of a valve or block fails, the other valve part or block and the aerated line lying in between ensure that the milked milk is not contaminated.

In this way it is ensured safely in a simple manner that the teat liner head is never connected to the dipping agent reservoir D_{V} during milking!

Cleaning occurs only after successful removal of the complete milking cluster. First, the milking robot separately removes the milking cups and then the milking cluster "as a whole" in order to connect it then to a corresponding milking cluster receptacle.

The milking cluster receptacle provides an airtight connection of the milking cluster to a cleaning or rinsing device so that when a vacuum is applied again to the milk lines of the milking cluster, washing fluid is pulled into the milking cluster. Thus, the milking system that has come into contact with the dipping agent is cleaned in a secure manner (in WO 2003/086054 the method of cleaning in place for milking clusters is explained clearly).

In addition one can proceed as follows during the cleaning of the dipping valve arrangement of the invention:

When the milking cluster is located in the milking cluster receptacle (that is, in the cleaning in place position), the valve W for the supply of water under pressure is opened simultaneously. The valve W remains open during the entire cleaning in place process, and the valve D for the dipping agent remains closed. The double pistons are on the right. The compressed air flowing into the dipping valve arrangement causes the connection in the corresponding block-bleed-block device to be opened in the manner described above.

At the same time, the compressed air finds its way through the bypass line 31 of the corresponding double piston 17, so that a mixture of water under pressure and compressed air clean the, for milking, decisive media lines of the respective dipping valve arrangement in the previously set time intervals in which the four compressed air valves A1 to A4 remain open.

A dipping process of the type of the invention will be explained again below briefly.

Especially preferably, all dipping valve arrangements 3a - 3d are filled or "loaded" simultaneously through the single valve D in line 14 from dipping agent reservoir D_{M} (see also Figure 5). This can be done before or during the actual milking process.

At the end of the milking process, the compressed air valve A1 to A4 connected in each case before inlet 9 is separately activated for each teat (see again Figure 5). Hereby the compressed air pushes the piston of cylinder 17 forward (in Figure 1 to the right) and opens at the same time the safety valve arrangement 21 at the control inlet 28 (see also Figures 3a, b).

When the complete amount of dipping agent is pushed out from cylinder chamber 20, compressed air flows through bypass line 31 into the "dipping line", that is, into lines 30 and the respective line 4a, 4b, 4c or 4d. Any residual dipping agent that may have remained in these lines is thereby passed immediately into the corresponding teat cups 1a - 1d or into the corresponding interiors of the teat liners.

The provided check valves 24 and 25 prevent penetration of the dipping agent into the cleaning or bypass line 15, 31. The check valve 23 prevents repumping of dipping agent into a dipping agent arrangement already activated.

This process is performed for each teat after the respective ending of the milking process, which is of special advantage when the removal of the teat cups 1 after milking occurs individually for each teat.

During the cleaning process - which preferably is performed after the ending of all dipping processes for all the teats (see again Figure 5), the compressed air inlet line is opened by the opening of valves A1 to A4 in order to open the safety pistons. Simultaneously, the cleaning agent is introduced through valve W into the dipping valve arrangements. Then the cleaning agent is guided in the direction of the teat cups and from there it is removed with vacuum. During the cleaning process, the check valve 23 prevents entry of the cleaning agent into the cylinder 17 and prevents its being subsequently contaminated with the dipping agent.

**Reference list**

| | |
|---|---|
| Teat cup | 1 |
| Dipping device | 2 |
| Dipping valve arrangements | 3a - 3d |
| Inlet line | 4 |
| Duct | 5 |
| Discharge | 6 |
| Duct | 7 |
| Inlet lines | 8a - 8d |
| Inlets | 9, 10, 11 |
| Lines | 13a - 13d |
| Branch lines | 14a - 14d |
| Inlet | 15 |
| Branch lines | 15a - 15d |
| Inlet | 15 |
| Cylinder | 17 |
| Check valve | 18 |
| Chamber | 19 |
| Chamber | 20 |
| Valve arrangement | 21 |
| Check valves | 23, 24, 25 |
| Shut-off valves | 26, 27 |
| Control inlet | 28 |
| Bypass line | 30 |
| Control inlet | 29 |
| Shut-off valves | A1 to A4 |
| Shut-off valves | D, W |
| Dipping agent supply | D_{M} |
| Water supply | Wᵥ |
| Compressed air supply | Pᵥ |
| Shut-off valves | Z1 to Z4 |

## Claims

1. Dipping device for a milking system, especially for an automatic milking system designed as a milking robot with teat cups (1a -1d) to be placed onto the teats of an animal to be milked, whereby the dipping device (2) is designed to bring the teats of the animal into contact with at least one fluid or several fluids, for which purpose the dipping device (2) has a dipping valve arrangement (3a -3d), the introduction of the dipping agent to each teat of the animal being controllable separately, **characterized by** the fact that an inlet line (4a - 4d) for the fluid to be introduced is guided to each teat cup (1a - 1d) and that one of the dipping valve arrangements (3a - 3d) is assigned to each of the inlet lines (4a - 4d) and/or to each of the teat cups (1a - 1d) and that the dipping valve arrangements (3a - 3d) can be controlled separately and by the fact that the inlet lines (4a - 4d) open into ducts (5) of the teat cups (1a -1d) into an inside chamber of the teat liner of the teat cup through which the fluid or several different fluids can be guided into the inside of the teat cup and by the fact that each of the dipping valve arrangements (3a - 3d) has at least one safety valve arrangement (21) and by the fact that the dipping valve arrangements (3a - 3d) each have three inlets (9a - 9d, 10a - 10d and 11a - 11 d) for compressed air, the dipping agent and a cleaning fluid, and one discharge (12a - 12d) to which in each case one of the inlet lines (4a - 4d) is connected to the teat cups and by the fact that each of the dipping valve arrangements (3a - 3d) furthermore has at least one double action cylinder (17), whose one cylinder chamber (20) can be filled with dipping agent and whose other cylinder chamber (19) is connected to the particular first inlet (9a - 9d).

2. Dipping device according to one of the previous claims, **characterized by** the fact that the safety valve arrangement (21) can be controlled pneumatically.

3. Dipping device according to one of the previous claims, **characterized by** the fact that in each case the first inlet (9a - 9d) is connected to a compressed air supply (PV) through a line (13) branching from a compressed air supply (PV) toward the inlets (9a - 9d) of the dipping valve arrangements (3a - 3d) and that a shut-off valve (A1 -A4) is connected in the branch lines (13a, 13b, 13c, 13d) always connected in front of the inlets (9a - 9d).

4. Dipping device according to one of the previous claims, **characterized by** the fact that in each case the chambers (20) of the cylinders (17) are connected to a dipping agent reservoir (DM) through the second inlets (10a -10d) of the dipping valve arrangements (3a - 3d) through an inlet (14) which branches into branch lines (14a - 14d) in which a shut-off valve (D) is connected before the region of the branching, and that the third inlets (11a - 11d) of the dipping valve arrangements (3a - 3d) are connected to a cleaning agent supply (Wv) through an inlet line (15) branching into branch lines (15a - 15b) in which a shut-off valve (W) is connected before the region of the branching.

5. Dipping device according to one of the previous claims, **characterized by** the fact that one of the cylinder chambers (19) of the cylinder (17) is in each case connected to the corresponding inlet (9a - 9d) for introducing compressed air and that the other cylinder chamber (20) on the cylinder (17) is further connected to an inlet of the particular safety valve arrangement (21) through an internal line (30), the output of which is connected to the output (12a - 12d) and thus to one of the inlet lines (4a - 4d) to the teat cups (1a - 1d).

6. Dipping device according to one of the previous claims, **characterized by** the fact that the line (30) between the cylinder chamber (20) and the safety valve arrangement (21) has a check valve (23) connected in it.

7. Dipping device according to one of the previous claims, **characterized by** the fact that the teat liners are designed so that the teat can be cleaned, milked and/or dipped with only one teat liner.

8. Dipping device according to one of the previous claims, **characterized by** the fact that the safety valve arrangement (21) is designed as a 5/2-2-way valve or as a 3/2-way valve.

9. Dipping device according to one of the previous claims, **characterized by** the act that the dipping valve arrangements (3a - 3d) can be controlled purely pneumatically.

10. Dipping device according to one of the previous claims, **characterized by** the fact that the dipping valve arrangement (3a - 3d) is in each case constructed as a single structural unit.

## Patentansprüche

1. Eintauchvorrichtung für ein Melksystem, insbesondere für ein automatisches Melksystem, welches als ein Melkroboter mit Zitzenbechern (1a - 1d), die auf die Zitzen eines zu melkenden Tieres aufgebracht werden, ausgebildet ist, wobei die Eintauchvorrichtung (2) zu einem Inkontaktbringen der Zitzen des Tieres mit mindestens einem Fluid oder verschiedenen Fluids ausgebildet ist, wobei die Eintauchvorrichtung (2) zu diesem Zweck eine Dip-Ventilanordnung (3a-3d) aufweist, wobei die Einleitung des Dip-Mittels zu jeder Zitze des Tiers separat steuerbar ist, **dadurch gekennzeichnet, dass** eine Einlassleitung (4a - 4d) für das einzuleitende Fluid zu jedem Zitzenbecher (1a - 1d) geführt ist, und dass eine der Dip-Ventilanordnungen (3a - 3d) jeweils einer der Einlassleitungen (4a - 4d) und/oder jeweils einem der Zitzenbecher (1a - 1d) zugeordnet ist, und dass die Dip-Ventilanordnungen (3a - 3d) separat steuerbar sind, und dadurch, dass die Einlassleitungen (4a - 4d) in Kanäle (5) der Zitzenbecher (1a - 1d) in eine innere Kammer des Zitzengummis des Zitzenbechers münden, durch welche das Fluid oder mehrere unterschiedliche Fluids in das Innere des Zitzenbechers geleitet werden können, und dadurch, dass jede der Dip-Ventilanordnungen (3a-3d) mindestens eine Sicherheitsventilanordnung (21) aufweist, und dadurch, dass die Dip-Ventilanordnungen (3a - 3d) jeweils drei Einlässe (9a - 9d, 10a - 10d und 11a - 11d) für Druckluft, das Dip-Mittel und ein Reinigungsfluid und einen Auslass (12a - 12d) aufweisen, an welchen jeweils eine der Einlassleitungen (4a-4d) zu den Zitzenbechern angeschlossen ist, und dadurch, dass jede der Dip-Ventilanordnungen (3a - 3d) weiterhin mindestens einen doppeltwirkenden Zylinder (17) aufweist, dessen eine Zylinderkammer (20) mit Dip-Mittel befüllbar ist und dessen andere Zylinderkammer (19) mit dem jeweiligen ersten Einlass (9a - 9d) verbunden ist.

2. Eintauchvorrichtung nach einem der vorhergehenden Ansprüche, **dadurch gekennzeichnet, dass** die Sicherheitsventilanordnung (21) pneumatisch steuerbar ist.

3. Eintauchvorrichtung nach einem der vorhergehenden Ansprüche, **dadurch gekennzeichnet, dass** jeder erste Einlass (9a - 9d) an eine Druckluftversorgung (PV) über eine Leitung (13), die von einer Druckluftversorgung (PV) zu den Einlässen (9a - 9d) der Dip-Ventilanordnungen (3a - 3d) verzweigt, angeschlossen ist, und dass ein Sperrventil (A1 - A4) in den Zweigleitungen (13a, 13b, 13c, 13d) jeweils von den Einlässen (9a - 9d) eingefügt ist.

4. Eintauchvorrichtung nach einem der vorhergehenden Ansprüche, **dadurch gekennzeichnet, dass** jede der Kammern (20) der Zylinder (17) mit einem Dip-Mittelbehälter (D_{M}) durch die zweiten Einlässe (10a - 10d) der Dip-Ventilanordnungen (3a - 3d) über einen Einlass (14) verbunden ist, welcher in Zweigleitungen (14a - 14d) verzweigt, in die ein Sperrventil (D) vordem Bereich der Verzweigung eingefügt ist, und dass die dritten Einlässe (11a - 11d) der Dip-Ventilanordnungen (3a-3d) mit einer Reinigungsmittelversorgung (Wv) durch eine Einlassleitung (15) verbunden sind, welche in Zweigleitungen (15a - 15b) verzweigt, in die ein Sperrventil (W) vor dem Bereich der Verzweigung eingefügt ist.

5. Eintauchvorrichtung nach einem der vorhergehenden Ansprüche, **dadurch gekennzeichnet, dass** eine der Zylinderkammern (19) des Zylinders (17) jeweils mit dem korrespondierenden Einlass (9a - 9d) zur Einleitung von Druckluft verbunden ist, und dass die andere Zylinderkammer (20) an dem Zylinder (17) weiterhin an einen Einlass der jeweiligen Sicherheitsventilanordnung (21) über eine interne Leitung (30) angeschlossen ist, deren Auslass an den Auslass (12a - 12d) angeschlossen und so mit einer der Einlassleitungen (4a - 4d) zu den Zitzenbechern (1a - 1d) verbunden ist.

6. Eintauchvorrichtung nach einem der vorhergehenden Ansprüche, **dadurch gekennzeichnet, dass** die Leitung (30) zwischen der Zylinderkammer (20) und der Sicherheitsventilanordnung (21) ein eingebautes Rückschlagventil (23) aufweist.

7. Eintauchvorrichtung nach einem der vorhergehenden Ansprüche, **dadurch gekennzeichnet, dass** die Zitzengummis so ausgebildet sind, dass die Zitze mit nur einem Zitzengummi gereinigt, gemolken und/oder gedipt bzw. eingetaucht werden kann.

8. Eintauchvorrichtung nach einem der vorhergehenden Ansprüche, **dadurch gekennzeichnet, dass** die Sicherheitsventilanordnung (21) als ein 5/2-Wegeventil oder als ein 3/2-Wegeventil ausgebildet ist.

9. Eintauchvorrichtung nach einem der vorhergehenden Ansprüche, **dadurch gekennzeichnet, dass** die Dip-Ventilanordnungen (3a- 3d) völlig pneumatisch steuerbar sind.

10. Eintauchvorrichtung nach einem der vorhergehenden Ansprüche, **dadurch gekennzeichnet, dass** die Dip-Ventilanordnung (3a - 3d) jeweils eine einzelne Baueinheit ist.

## Revendications

1. Dispositif d'immersion pour un système de traite, particulièrement pour un système de traite automatique conçu sous la forme d'un robot de traite avec des gobelets trayeurs (1a-1d) à placer sur les trayons d'un animal à traire, de telle manière que le dispositif d'immersion (2) soit conçu pour mettre les trayons de l'animal en contact avec au moins un fluide ou plusieurs fluides, le dispositif d'immersion (2) comportant à cet effet un agencement de vanne d'immersion (3a-3d), l'introduction de l'agent d'immersion dans chaque trayon de l'animal pouvant être commandée séparément, **caractérisé en ce qu'**une conduite d'entrée (4a-4d) pour le fluide à introduire est guidée vers chaque gobelet trayeur (1a-1d), **en ce qu'**un des agencements de vanne d'immersion (3a-3d) est affecté à chacune des conduites d'entrée (4a-4d) et/ou à chacun des gobelets trayeurs (1a-1d) et **en ce que** les agencements de vanne d'immersion (3a-3d) peuvent être commandés séparément et **en ce que** les conduites d'entrée (4a-4d) s'ouvrent dans des conduits (5) des gobelets trayeurs (1a-1d) dans une chambre intérieure du manchon du gobelet trayeur à travers lesquels le fluide ou plusieurs fluides différents peuvent être guidés à l'intérieur du gobelet trayeur et **en ce que** chacun des agencements de vanne d'immersion (3a-3d) a au moins un agencement de clapet de sécurité (21) et **en ce que** chacun des agencements de vanne d'immersion (3a-3d) comporte trois entrées (9a-9d, 10a-10d et 11a-11d) pour air comprimé, l'agent d'immersion et un fluide de nettoyage, et un orifice d'évacuation (12a-12d) par lequel, dans chaque cas, l'une des conduites d'entrée (4a-4d) est reliée aux gobelets trayeurs et **en ce que** chacun des agencements de vanne d'immersion (3a-3d) comporte en outre au moins un vérin double effet (17) dont une chambre de vérin (20) peut être remplie d'agent d'immersion et l'autre chambre de vérin (19) est reliée à la première entrée particulière (9a-9d).

2. Dispositif d'immersion selon l'une des revendications précédentes, **caractérisé en ce que** l'agencement de clapet de sécurité (21) peut être à commande pneumatique.

3. Dispositif d'immersion selon l'une des revendications précédentes, **caractérisé en ce que**, dans chaque cas, la première entrée (9a-9d) est reliée à une alimentation d'air comprimé (PV) à travers une conduite (13) reliant l'alimentation d'air comprimé (PV) aux entrées (9a-9d) des agencements de vanne d'immersion (3a-3d) et **en ce qu'**une vanne d'arrêt (A1-A4) est reliée aux conduites d'embranchement (13a, 13b, 13c, 13d) en étant toujours reliée devant les entrées (9a-9d).

4. Dispositif d'immersion selon l'une des revendications précédentes, **caractérisé en ce que**, dans chaque cas, les chambres (20) des vérins (17) sont reliées à un réservoir d'agent d'immersion (D_{M}) à travers les deuxièmes entrées (10a-10d) des agencements de vanne d'immersion (3a-3d) à travers une entrée (14) reliée aux conduites d'embranchement (14a-14d) dans lesquelles une vanne d'arrêt (D) est reliée avant la région de l'embranchement, et les troisièmes entrées (11a-11d) des agencements de vanne d'immersion (3a-3d) sont reliées à une alimentation d'agent de nettoyage (Wᵥ) à travers une conduite d'entrée (15) s'embranchant dans des conduites d'embranchement (15a-15b) dans lesquelles une vanne d'arrêt (W) est reliée avant la région de l'embranchement.

5. Dispositif d'immersion selon l'une des revendications précédentes, **caractérisé en ce que**, dans chaque cas, l'une des chambres de vérin (19) du vérin (17) est reliée à l'entrée correspondante (9a-9d) pour introduire de l'air comprimé et **en ce que** l'autre chambre de vérin (20) du vérin (17) est en outre reliée à une entrée de l'agencement de clapet de sécurité particulier (21) à travers une conduite interne (30) dont la sortie est reliée à la sortie (12a-12d) et donc à l'une des conduites d'entrée (4a-4d) des gobelets trayeurs (1a-1d).

6. Dispositif d'immersion selon l'une des revendications précédentes, **caractérisé en ce que** la conduite (30) entre la chambre de vérin (20) et l'agencement de clapet de sécurité (21) comporte un clapet antiretour (23) qui lui est relié.

7. Dispositif d'immersion selon l'une des revendications précédentes, **caractérisé en ce que** les manchons sont conçus de sorte que le trayon puisse être nettoyé, trait et/ou immergé avec un seul manchon.

8. Dispositif d'immersion selon l'une des revendications précédentes, **caractérisé en ce que** l'agencement de clapet de sécurité (21) est conçu sous forme d'un clapet à 5/2-2 voies ou d'un clapet à 3/2 voies.

9. Dispositif d'immersion selon l'une des revendications précédentes, **caractérisé par** l'action selon laquelle les agencements de vanne d'immersion (3a-3d) peuvent être à commande purement pneumatique.

10. Dispositif d'immersion selon l'une des revendications précédentes, **caractérisé en ce que**, dans chaque cas, l'agencement de vanne d'immersion (3a-3d) est construit sous la forme d'une unité structurelle unique.
